# EUROPEAN PATENT APPLICATION

(11) **EP 4 541 920 A1**
(43) Date of publication of application: **23.04.2025**
(21) Application number: 23871733.4
(22) Date of filing: 31.08.2023
(51) Int. Cl.: C22C 38/00, C21D 9/46, C22C 38/28, C22C 38/60

(54) **FERRITIC STAINLESS STEEL MATERIAL FOR BATTERY COMPONENTS, METHOD FOR PRODUCING SAME, AND BATTERY COMPONENT**

(30) Priority: 26.09.2022 JP 2022152950
(71) Applicant: NIPPON STEEL Stainless Steel Corporation, Tokyo 100-0005 (JP)
(72) Inventor: HAMADA,Jun-ichi, Tokyo 100-0005 (JP); HAYASHI,Atsutaka, Tokyo 100-0005 (JP)
(74) Representative: J A Kemp LLP
(86) International application number: PCT/JP2023/031981
(87) International publication number: WO 2024/070493

(57) **Abstract**

A ferritic stainless steel material for battery components has a composition comprising, on a mass basis, C: 0.001 to 0.050%, Si: 0.01 to 2.00%, Mn: 0.01 to 2.00%, P: 0.010 to 0.050%, S: 0.0001 to 0.0100%, Cr: 10.0 to 30.0%, and N: 0.001 to 0.050%, and further comprising one or more selected from Ti: 0.01 to 0.50% and Nb: 0.01 to 0.60%, the balance being Fe and impurities. The ferritic stainless steel material for battery components contains 0.010% by volume or more of Ti-based deposits and/or Nb-based deposits.

## Description

### [Technical Field]

The present invention relates to a ferritic stainless steel material, a method for producing the same, and a battery component. More particularly, the present invention relates to a ferritic stainless steel material used for battery components of transportation equipment, a method for producing the same, and a battery component including the ferritic stainless steel material. As used herein, the "transportation equipment" means equipment for transporting luggage or passengers for automobiles, motorcycles, tricycles, bicycles, buses, rail cars and the like. Further, the "battery components" mean components of batteries, such as battery cases, battery packs, battery modules, and battery covers.

### [Background Art]

In recent years, from the viewpoint of environmental issues, improvement of a fuel efficiency of transportation equipment has become a main issue. As one of the solutions, weight reduction of bodies of the transportation equipment is being actively promoted. The weight reduction of the bodies is largely dependent on reduction of the weight of materials used for components that make up the bodies, e.g., reduction of the thicknesses of the materials. However, the reduction of the thickness of the material reduces the stiffness and collision absorption performance of the components. To address this problem, a steel material is used that is effective to increase the strength of the materials that make up the components, and called high-strength carbon steel (high tensile stainless steel).

However, the carbon steel is assumed to be heavily coated due to its low corrosion resistance capacity. Therefore, the carbon steel cannot be applied to uncoated components or lightly coated components, or has increased cost due to heavy coating. The carbon steel also has low heat resistance and cannot withstand thermal runaway that may occur in battery components. Here, the "thermal runaway" as used herein refers to a phenomenon in which heat inside a battery becomes uncontrollable for some reason, resulting in abnormal heat generation and, in some cases, ignition.

On the other hand, a stainless steel material containing Cr has improved corrosion resistance compared to the carbon steel, and so it is expected to reduce weight by reducing a rust allowance (a thickness including anticipated rust) and omit coating. The stainless steel material also has improved heat resistance compared to the carbon steel, so that the former also has resistant to thermal runaway. Hence, safety can be improved by suppressing ignition and fire spread. Therefore, the use of the stainless steel material provides significant advantages such as improved fuel efficiency due to lighter body weight, simplification of coating, and improved safety.

In the field of transportation equipment such as automobiles, power trains are diversifying, and in addition to engine, diesel, and hybrid vehicles with internal combustion engines, electric vehicles and fuel cell vehicles without internal combustion engines are being commercialized. In particular, the electric vehicles are equipped with large-capacity batteries and run by motor drive, and are provided with many battery components. Since the electric vehicles are equipped with multiple batteries, a thermal runaway of one battery can easily lead to a chain reaction of thermal runaway of other batteries, possibly resulting in a vehicle fire.

Materials used for battery components include stainless steel materials, aluminum, resins, and Ni plated steel materials.

For example, as a stainless steel material used for battery components, Patent Literature 1 discloses a method for producing a case for lithium ion batteries that use austenitic stainless steel foil as a material. Also, Patent Literature 2 discloses that an austenitic stainless steel sheet is applied to a battery case for use in electric vehicles, which have improved heat resistance. Furthermore, Patent Literature 3 discloses a ferritic stainless steel material doped with 16.0 to 32.0% by mass of Cr, which is used as an electrode material and an electrode case for large-capacity batteries.

However, the stainless steel materials disclosed in Patent Literatures 1 to 3 do not have any sufficient impact absorption property (impact resistance) when they are used for battery components. Therefore, when shocks are applied to the batteries such as by collision accidents, the batteries are easily damaged to cause short circuits in the batteries to lead to thermal runaway.

On the other hand, as a technique to suppress the thermal runaway of batteries due to shocks, Patent Literature 4 proposes a technique for providing an insulating layer to a laminate seal that makes up a case for rechargeable batteries. Also, each of Patent Literatures 5 to 7 also proposes a technique for suppressing thermal runaway of batteries by installing a member formed from mica in the battery components.

However, these techniques have problems which cannot suppress damages to battery components and which lead to increased costs due to the installation of the insulation layer and mica. Also, these techniques do not improve the shock absorption property of the stainless steel material, so that it would be difficult to reduce the thicknesses of battery components.

### [Citation List]

### [Patent Literature]

[PTL 1] Japanese Patent No. 6090923 B
[PTL 2] Japanese Patent Application Publication No. 10-188922 A
[PTL 3] Japanese Patent Application Publication No. 2009-167486 A
[PTL 4] Japanese Patent No. 6522736 B
[PTL 5] Japanese Patent Application Publication No. 2022-522369 A
[PTL 6] WO 2019/150771 A1
[PTL 7] Japanese Patent No. 6631726 B

### [Summary of Invention]

### [Technical Problem]

As described above, there are no materials that provide improved resistance to thermal runaway as well as protection for batteries when they are subjected to impacts due to collision accidents and the like.

Under these circumstances, an object of the present invention is to provide a ferritic stainless steel material for battery components that has improved protection performance and resistance to thermal runaway when the batteries are subjected to impacts due to collision accidents or the like; a method for producing the same; and a battery component.

### [Solution to Problem]

As a result of intensive studies, the present inventors have found that ferritic stainless steel materials with controlled compositions and amounts of predetermined deposits can solve the above problems. The present inventors have also found that the ferritic stainless steel material having such features can be obtained by annealing a cold-rolled material having a specific composition and cooling it under specific conditions. The present invention was completed on the basis of these findings.

Thus, the present invention relates to a ferritic stainless steel material for battery components, the ferritic stainless steel material having a composition comprising, on a mass basis, C: 0.001 to 0.050%, Si: 0.01 to 2.00%, Mn: 0.01 to 2.00%, P: 0.010 to 0.050%, S: 0.0001 to 0.0100%, Cr: 10.0 to 30.0%, N: 0.001 to 0.050%, and further comprising one or more selected from Ti: 0.01 to 0.50% and Nb: 0.01 to 0.60%, the balance being Fe and impurities, wherein the ferritic stainless steel material comprises 0.010% by volume or more of Ti-based deposits and/or Nb-based deposits.

The present invention also relates to a method for producing a ferritic stainless steel material for battery components, comprising: annealing a cold-rolled material at 850 to 1050°C, the cold-rolling member having a composition comprising, on a mass basis, C: 0.001 to 0.050%, Si: 0.01 to 2.00%, Mn: 0.01 to 2.00%, P: 0.010 to 0.050%, S: 0.0001 to 0.0100%, Cr: 10.0 to 30.0%, N: 0.001 to 0.050%, and further comprising one or more selected from Ti: 0.01 to 0.50% and Nb: 0.01 to 0.60%, the balance being Fe and impurities; and cooling it at a cooling rate of 10°C/second or less to 800°C.

Furthermore, the present invention relates to a battery component comprising the ferritic stainless steel material for battery components.

### [Advantageous Effects of Invention]

According to the present invention, it is possible to provide a ferritic stainless steel material for battery components that has improved protection performance and resistance to thermal runaway of batteries when they are subjected to impacts due to collision accidents or the like; a method for producing the same; and a battery component.

### [Brief Description of Drawings]

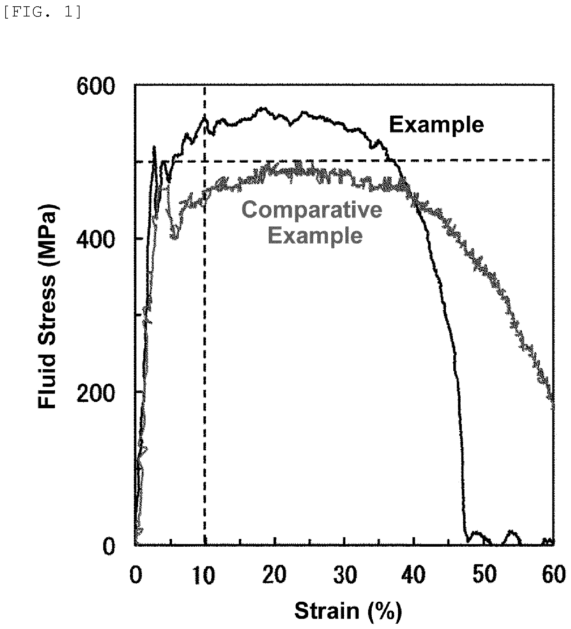

[FIG. 1] FIG. 1 is a graph showing a relationship between strain and flow stress in a tensile test at a strain rate of 10³/second for a ferritic stainless steel material containing 0.010% by volume of Ti-based deposits and/or Nb-based deposits and a ferritic stainless steel material that does not contain Ti-based deposits and/or Nb-based deposits.

### [Description of Embodiments]

To ensure protection performance of batteries when they are subjected to impacts due to collision accidents and the like, it is necessary to improve an impact absorption property (impact resistance) of a ferritic stainless steel material that will be a material for battery components, during high-speed deformation. Also, to ensure resistance to thermal runaway, a high-temperature stiffness of the ferritic stainless steel material should be improved.

In the present invention, to assume the impacts due to collision accidents and the like, the flow stress at 10% strain in a tensile test at a strain rate of 10³/second was used to evaluate the impact absorption property during high-speed deformation, and Young's modulus at 900°C was used to evaluate the high-temperature stiffness, and various ferritic stainless steel materials were prepared, and analyzed and studied in detail. As a result, the present inventors have found that the impact absorption property during high-speed deformation and the high-temperature stiffness can be improved by controlling the composition of the ferritic stainless steel material and amounts of predetermined deposits.

Hereinafter, embodiments of the present invention that have been completed on the basis of the above viewpoints will be specifically described below. It is to understand that the present invention is not limited to the following embodiments, and those which have appropriately added changes, improvements and the like to the following embodiments based on knowledge of a person skilled in the art without departing from the spirit of the present invention fall within the scope of the present invention.

It should be noted that, as used herein, the expression "%" in relation to any component means "% by mass", unless otherwise specified.

### (1) Ferritic Stainless Steel Material for Battery Components

The ferritic stainless steel material for battery components according to an embodiment of the present invention (which may be, hereinafter, abbreviated as a "ferritic stainless steel material") has a composition containing C: 0.001 to 0.050%, Si: 0.01 to 2.00%, Mn: 0.01 to 2.00%, P: 0.010 to 0.050%, S: 0.0001 to 0.0100%, Cr: 10.0 to 30.0%, N: 0.001 to 0.050%, and further containing one or more selected from Ti: 0.01 to 0.50% and Nb: 0.01 to 0.60%, the balance being Fe and impurities.

Here, the term "impurities" as used herein refers to components which are contaminated by raw materials such as ores and scraps, and various factors in the production steps, when the ferritic stainless steel materials are industrially produced, and which are permissible in a range that does not adversely affect the present invention. For example, the impurities include unavoidable impurities. Examples of the impurities include O, As, Pb and the like. The impurities are preferably reduced as much as possible.

Also, the term "stainless steel material" as used herein means a material formed of stainless steel, and a shape of the material is not particularly limited. Examples of the shape of the material include a sheet shape (including a strip shape), a rod shape, and a tubular shape. Further, the material may be various shaped steels having cross-sectional shapes such as T-shape and I-shape.

The term "ferritic" as used herein means that the metallographic structure is mainly made of a ferrite phase at ordinary temperature. Therefore, the "ferritic" includes those containing minor amounts of phases other than the ferrite phase (for example, an austenite phase and a martensite phases, etc.). However, the term "ferritic" does not include a duplex structure of the ferrite phase and the austenite phase, a duplex structure of the ferrite phase and the martensite phase, or a duplex structure of the ferrite phase, the austenite phase, and the martensite phase. Although these stainless steel materials having these duplex structures have high strength, they have an insufficient impact absorption property (flow stress during high-speed deformation) and insufficient workability during high-speed deformation.

The ferritic stainless steel material according to the embodiment of the present invention can further contain one or more selected from Ni: 0.01 to 2.00%, Al: 0.001 to 1.000%, Cu: 0.01 to 2.00%, Mo: 0.01 to 3.00%, V: 0.01 to 0.50%, Zr: 0.01 to 0.50%, B: 0.0002 to 0.0050%, Ca: 0.0005 to 0.0100%, W: 0.10 to 3.00%, Sn: 0.01 to 0.50%, Co: 0.03 to 0.30%, Mg: 0.0002 to 0.0100%, Sb: 0.005 to 0.300%, REM: 0.002 to 0.200%, Ga: 0.0002 to 0.3000%, Ta: 0.001 to 1.000%, Hf: 0.001 to 1.000%, and Bi: 0.001 to 0.020%.
Each component will be described in detail below.

### <C: 0.001 to 0.050%>

Since C is an element that decreases corrosion resistance and heat resistance, the content of C is 0.050% or less. However, since excessive reduction of C leads to increased refining costs, the lower limit of the content of C should be 0.001%. From the viewpoint of the shock absorption property (flow stress during high-speed deformation), the lower limit of the content of C is preferably 0.003% or more. From the viewpoint of weldability, the upper limit of the content of C is preferably 0.010% or less. Furthermore, in view of manufacturability and workability, the content of C is preferably 0.003 to 0.008% is more.

### <Si: 0.01 to 2.00%>

Si is a deoxidizing element. The content of Si is 0.01% or more because Si is a solid solution strengthening element and an effective element for improving the impact absorption property (flow stress during high-speed deformation). However, since excessive addition of Si leads to a sharp decrease in ductility, the upper limit of the content of Si is 2.00%. Also, in view of corrosion resistance and manufacturability, the content of Si is preferably 0.05 to 0.90%. Furthermore, in view of weldability and toughness, the content of Si is more preferably 0.10 to 0.40%.

### <Mn: 0.01 to 2.00%>

Mn is a deoxidizing element. Since Mn is also a solid solution strengthening element and an effective element for improving the impact absorption property (flow stress during high-speed deformation), the content of Mn should be 0.01% or more. However, since excessive addition of Mn leads to a decrease in corrosion resistance, the upper limit of the content of Mn should be 2.00%. Also, in view of oxidation resistance and strength, the content of Mn is preferably 0.10 to 1.00%. Furthermore, in view of manufacturability and weldability, the content of Mn is more preferably 0.20 to 0.50%.

### <P: 0.010 to 0.050%>

Less P is desirable because it reduces workability, corrosion resistance, and manufacturability. If the content of P is too high, coarse phosphides are formed and become a starting point for void formation during high-speed deformation, and therefore, the upper limit of the content of P should be 0.050%. On the other hand, since the formation of fine FeTiP and FeNbP leads to an improved shock absorption property (flow stress during high-speed deformation), the lower limit of the content of P should be 0.010%. In view of refining cost and workability, the content of P is preferably 0.020 to 0.030%.

### <S: 0.0001 to 0.0100%>

Less S is desirable because it reduces workability, corrosion resistance, and manufacturability. If the content of S is too high, coarse sulfides are formed and become a starting point for void formation during high-speed deformation, and therefore, the upper limit of the content of S should be 0.0100%. On the other hand, since the formation of fine TiS and Ti₄C₂S₂ leads to an improved shock absorption property (flow stress during high-speed deformation), the lower limit of the content of S should be 0.0001%. In view of refining cost and weldability, the content of S is preferably 0.0005 to 0.0020%.

### <Cr: 10.0 to 30.0%>

Cr is an element added to improve the corrosion resistance and heat resistance. In particular, the content of Cr should be 10.0% or more to omit the coating and the like, and to improve the high-temperature rigidity. On the other hand, an excessively high content of Cr will significantly deteriorate the toughness, and therefore, the upper limit of the content of Cr should be 30.0%. In view of manufacturability, cost, corrosion resistance of welded portions, and the shock absorption property during high-speed deformation, the content of Cr is preferably 11.0 to 18.0%.

### <N: 0.001 to 0.050%>

Since N is an element that decreases corrosion resistance and heat resistance, the content of N should be 0.050% or less. However, since excessive reduction of N leads to increased refining costs, the lower limit of the content of N should be 0.001%. From the viewpoint of the shock absorption property during high-speed deformation, the lower limit of the content of N is preferably 0.003% or more. From the viewpoint of weldability, the upper limit of the content of N is preferably 0.010% or less. Furthermore, in view of manufacturability and workability, the content of N of 0.003 to 0.008% is more preferred.

### <One or More Selected from Ti: 0.01 to 0.50% and Nb: 0.01 to 0.60>

Ti and Nb combine with C and N to prevent grain boundary corrosion by inhibiting the formation of coarse Cr carbonitrides, and also promote the development of a {111} aggregate structure, which will contribute to improved workability (e.g., deep drawability). Ti and Nb are also elements necessary to form Ti-based deposits and Nb-based deposits that are effective in improving the shock absorption property (flow stress during high-speed deformation). As used herein, "Ti-based deposits and Nb-based deposits" means Ti and Nb carbides and nitrides as well as phosphides (FeTiP, FeNbP) and sulfides (TiS, Ti₄C₂S₂). In order to produce predetermined amounts of Ti-based deposits and Nb-based deposits in the ferritic stainless steel material, the content of Ti should be 0.01% or more and the content of Nb should be 0.01% or more. Excessive addition of Ti and Nb, however, will cause the Ti-based deposits and Nb-based deposits to become too coarse, resulting in a reduction in toughness. Therefore, the upper limit of the content of Ti is 0.50% and the upper limit of the content of Nb is 0.60%. From the viewpoints of workability, manufacturability, and cost, each of the content of Ti and the content of Nb is preferably 0.05 to 0.30% or less. Furthermore, from the viewpoint of production cost, each of the content of Ti and the content of Nb is preferably 0.05 to 0.20%.

### <Ni: 0.01 to 2.00%>

Ni is an element that contributes to high strength and is effective in improving the impact absorption property (flow stress during high-speed deformation), and is added as needed in an amount of 0.01% or more. However, the upper limit of the content of Ni should be 2.00%, because excessive addition of Ni reduces high-temperature stiffness (high-temperature Young's modulus), increases component costs, and reduces formability by causing the formation of the austenite phase and the martensite phase. In view of toughness and corrosion resistance, the content of Ni is preferably 0.10 to 1.00%. Furthermore, in view of heat resistance, the content of Ni is more preferably 0.20 to 0.50%.

### <Al: 0.001 to 1.000%>

Si is added as a deoxidizing element. To exert this effect efficiently, 0.001% or more of Si is added as needed. Al is also an effective element for improving workability due to the formation of nitrides, increasing strength due to solid solution strengthening, and improving oxidation resistance. Excessive addition of Al, however, leads to reduced high-temperature stiffness, generation of surface defects, poor weldability, and reduced ductility due to coarse AlN. Therefore, the upper limit of the content of Al should be 1.000%. Also, in view of a deoxidizing efficiency and toughness, the content of Al is preferably 0.020 to 0.500%. Furthermore, in view of weldability, the content of Al is more preferably 0.020 to less than 0.100%.

### <Cu: 0.01 to 2.00%>

Cu is optionally added in an amount of 0.01% or more to improve corrosion resistance and to increase high-temperature stiffness and high-temperature strength due to ε-Cu deposition. On the other hand, an excessively high content of Cu will significantly deteriorate the ductility, and therefore, the upper limit of the content of Cu should be 2.00%. Also, in view of oxidation resistance and component costs, the content of Cu is preferably 0.05 to 1.50%. Furthermore, in view of toughness and weldability, the content of Cu is preferably 0.10 to 0.50%.

### <Mo: 0.01 to 3.00%>

Mo is an element for improving the corrosion resistance. Mo is also a solid solution strengthening element and is effective in improving the impact absorption property during high-speed deformation (flow stress during high-speed deformation). Therefore, Mo is optionally added in an amount of 0.01% or more. However, the upper limit of the content of Mo should be 3.00%, because excessive addition of Mo will reduce workability and increase costs, and will also significantly reduce toughness. From the viewpoint of high-temperature stiffness and oxidation resistance, the content of Mo is preferably 0.10 to 1.50%. Furthermore, from the viewpoint of cost reduction, the content of Mo is more preferably 0.10 to 1.20%.

### <V: 0.01 to 0.50%, Zr: 0.01 to 0.50%>.

As with Ti and Nb, V and Zr are elements that combine with C and N to inhibit the formation of coarse Cr carbonitrides. V and Zr are also effective elements in the formation of micro-precipitates (Zr(C,N) and V(C,N)) to improve the shock absorption property during high-speed deformation (flow stress during high-speed deformation). Therefore, each of V and Zr is added in an amount of 0.01% or more. However, since excessive addition of V and Zr leads to a decrease in toughness and high-temperature stiffness, the upper limit of each of the contents of V and Zr is 0.50%. From the viewpoint of formability, each of the contents of V and Zr is preferably 0.05 to 0.30%. Furthermore, in view of the impact absorption property at welded portion during high-speed deformation and a bending property, each of the contents of V and Zr is preferably 0.1 to 0.2%.

### <B: 0.0002 to 0.0050%>

B is an element that is effective for increasing strength and also suppresses secondary work cracking. B may also form borides, and may be effective for improving the shock absorption property during high-speed deformation (flow stress during high-speed deformation). Therefore, B is added in an amount of 0.0002% or more as needed. However, the upper limit of the content of B should be 0.0050%, because excessive addition of B can be a starting point for void formation, resulting in reduced formability and toughness. Also, in view of corrosion resistance, the content of B is preferably 0.0002 to 0.0020%. Furthermore, in view of weldability, the content of B is more preferably 0.0005 to 0.0010%.

### <Ca: 0.0005 to 0.0100%>

Ca is added in an amount of 0.0005% or more as needed, in order to fix S and to improve hot workability. On the other hand, however, excessive addition of Ca reduces corrosion resistance and also decreases ductility during high-speed deformation due to coarse CaS. Therefore, the upper limit of the content of Ca should be 0.0100%. From the viewpoint of manufacturability, the content of Ca is preferably 0.0005 to 0.0010%.

### <W: 0.10 to 3.00%>

W is an element for improving the corrosion resistance and is also a solid solution strengthening element. Therefore, it is added in an amount of 0.10% or more depending on the level of corrosion resistance in the operating environment. However, since excessive addition of W leads to decreases in workability and toughness and an increase in cost, the upper limit of the content of W should be 3.00%. The content of W is preferably 0.10 to 1.50%.

### <Sn: 0.01 to 0.50%>

Sn is added as needed in an amount of 0.01% or more to improve corrosion resistance and high-temperature strength. However, excessive addition of Sn may cause slab cracking during production, as well as significant intergranular cracking during processing (e.g., during hole expansion). Therefore, the upper limit of the content of Sn should be 0.50%. Furthermore, in view of refining costs and manufacturability, the content of Sn is preferably 0.01 to 0.30%.

### <Co: 0.03 to 0.30%>

Co is added as needed in an amount of 0.03% or more to improve high-temperature strength. However, excessive addition of Co leads to reduced toughness during production, increased costs, and reduced workability (e.g., reduced a hole-expanding property). Therefore, the upper limit of the content of Co should be 0.30%. Furthermore, in view of refining costs and manufacturability, the content of Co is preferably 0.03 to 0.10%.

### <Mg: 0.0002 to 0.0100%>

Mg is added as a deoxidizing element. Mg also contributes to improved manufacturability by refining ferrite grains, improvement of surface defects known as ridging, and improvement of workability at welded portions. Therefore, to exert these effects, the content of Mg is 0.0002% or more. Excessive addition of Mg, however, significantly reduces corrosion resistance and also decreases workability (e.g., the hole expanding property) due to coarse MgO. Therefore, the upper limit of the content of Mg should be 0.0100%. In view of manufacturability, the content of Mg is preferably 0.0002 to 0.0020%.

### <Sb: 0.005 to 0.300%>

Sb is an element that segregates at grain boundaries to increase high-temperature strength. To obtain this additive effect of Sb, the content of Sb should be 0.005% or more. However, excessive addition of Sb may cause intergranular cracking during processing (e.g., during a hole expanding process) and cracking during welding due to segregation of Sb, and therefore, the upper limit of the content of Sb should be 0.300%. In view of high temperature properties, production costs and toughness, the content of Sb is preferably 0.030 to 0.200%, and more preferably 0.050 to 0.100%.

### <REM: 0.002 to 0.200%>

REM (rare earth elements) is effective for improving oxidation resistance and is added in amount of 0.002% or more as needed. However, the upper limit of the content of REM should be 0.200%, because excessive addition of REM saturates its effect and reduces corrosion resistance and hole expanding property due to granules of REM. In view of workability and production costs, the content of REM is preferably 0.002 to 0.100%.

It should be noted that REM is in accordance with the general definition. In other words, REM is a generic term for two elements, scandium (Sc) and yttrium (Y), and 15 elements (lanthanoide) ranging from lanthanum (La) to lutetium (Lu). REM may be added alone or in a mixture.

### <Ga: 0.0002 to 0.3000%>

Ga is an element that is optionally added in order to improve corrosion resistance and inhibit hydrogen embrittlement. In particular, the lower limit of the content of Ga should be 0.0002% in terms of the formation of sulfides and hydrides that are effective for achieving these effects. From the viewpoint of manufacturability and costs, the content of Ga is preferably 0.0020% or more. However, the upper limit of the content of Ga should be 0.3000%, because excessive addition of Ga can cause the formation of coarse sulfides and deteriorate workability (e.g., hole-expanding property).

### <Ta: 0.001 to 1.000%, Hf: 0.001 to 1.000%>

Ta and Hf are elements that are effective for improving the high-temperature strength and are optionally added. To achieve this effect, each of the contents of Ta and Hf is preferably 0.001 to 1.000%. From the viewpoint of improving high-temperature strength, each of the content of Ta and the content of Hf is preferably 0.100% or less, and more preferably 0.010% or less.

### <Bi: 0.001 to 0.020%>

Bi is an element that is effective for improving machinability and is optionally added. To achieve this effect, the contents of Bi should be 0.001 to 0.020%. From the viewpoint of improving machinability, the content of Bi is preferably 0.015% or less.

The ferritic stainless steel material according to an embodiment of the present invention contains 0.010% by volume or more of Ti-based deposits and/or Nb-based deposits. That is, the ferritic stainless steel material according to the embodiment of the present invention may contain 0.010% by volume or more of Ti-based deposits, or 0.010% by volume or more of Nb-based deposits, or 0.010% by volume or more of Ti-based deposits and Nb-based deposits in total. By controlling the amounts of Ti-based deposits and/or Nb-based deposits to these range, the impact absorption property during high-speed deformation and high-temperature stiffness can be improved. On the other hand, the upper limits of the amounts of Ti-based deposits and/or Nb-based deposits are not particularly limited, but excessively high amounts may lead to forming defects due to void formation. From the viewpoint of suppressing this problem, the amounts of Ti-based deposits and/or Nb-based deposits are preferably 0.200% by volume or less. Also, in view of low-temperature toughness and weldability, the amounts of Ti-based deposits and/or Nb-based deposits are more preferably 0.020 to 0.100% by volume.

The amounts of Ti-based deposits and/or Nb-based deposits in the ferritic stainless steel material can be determined from area ratios of the Ti-based deposits and/or the Nb-based deposits in the entire structure by microscopic observation of a cross section of the ferritic stainless steel material according to the point counting method defined in JIS G0555: 2003.

The grain sizes of the Ti-based deposits and/or the Nb-based deposits are not particularly limited, but they may preferably be 10 µm or less, and more preferably 9 µm or less. By controlling the grain sizes of the Ti-based deposits and/or the Nb-based deposits to this range, void formation during forming, in addition to the impact absorption property during high-speed deformation and high-temperature stiffness, can be suppressed to improve corrosion resistance. It should be noted that the lower limits of the grain sizes of the Ti-base deposits and/or the Nb-based deposits are not particularly limited, but they may typically be 0.1 µm, and more preferably 1 µm.

The grain sizes of the Ti-based deposits and/or the Nb-based deposits can be measured by observing the cross section of the ferritic stainless steel material with a scanning electron microscope. The grain sizes of the Ti-based deposits and/or the Nb-based deposits are determined as area-equivalent circular diameters.

The ferritic stainless steel material according to the embodiment of the present invention preferably has a flow stress of 500 MPa or more at 10% strain in a tensile test at a strain rate of 10³/second.

Here, the flow stress at 10% strain in the tensile test at the strain rate of 10³/second is an index for the shock absorption property during high-speed deformation, which assumes impacts due to collision accidents and the like. If the flow stress is 500 MPa or more, it can be said that the material has an improved shock absorption property during high-speed deformation and is at a level that ensures collision safety for battery components in general automobiles. In view of weight reduction by reducing the thickness of the battery component composed of the ferritic stainless steel material, the flow stress is preferably 550 MPa or more, and more preferably 600 MPa or more.

As an example, FIG. 1 shows results of tensile tests conducted at a strain rate of 10³/second for a ferritic stainless steel material containing 0.010% by volume of Ti-based deposits and/or Nb-based deposits (referred to as "Example") and a ferritic stainless steel material that does not contain Ti-based deposits and/or Nb-based deposits (referred to as "Comparative Example"). FIG. 1 is a graph showing a relationship between strain (x-axis) and flow stress (y-axis). It should be noted that the ferritic stainless steel material according to each of Example and Comparative Example had a composition containing 17% Cr-0.01% C-0.01% N.

As shown in FIG. 1, Example has a higher flow stress of 500 Mpa or more at 10% strain and an improved shock absorption property during high-speed deformation, while Comparative Example has a flow stress of less than 500 MPa at 10% strain. This indicates that the presence of the Ti-based deposits and/or Nb-based deposits effectively act to hinder dislocation migration and lead to an increase in the flow stress when the strain rate is extremely high, 10³/second, as in collision accidents.

The ferritic stainless steel material according to the embodiment of the present invention preferably has a Young's modulus at 900°C of 80 GPa or more.

As used herein, the Young's modulus at 900°C is an index representing high-temperature stiffness. In the event of the collision accidents and the like, the interior of the destroyed battery will momentarily reach a temperature of about 900°C, and the battery components that make up the other batteries will also be exposed to the elevated temperature. If the Young's modulus at 900°C is less than 80 GPa in this case, the battery components will be deformed and easily develop thermal runaway. In contrast, if the Young's modulus at 900°C is 80 GPa or more, deformation of the battery components can be suppressed and thermal runaway can be prevented. In view of weight reduction by reducing the thickness of battery component composed of the ferritic stainless steel material, the Young's modulus at 900°C is preferably 90 GPa or more. The upper limit of the Young's modulus at 900°C is not particularly limited, but it may be, for example, 200 GPa, and generally 150 GPa, since a higher Young's modulus at 900°C can be said to provide superior high-temperature stiffness.

The Young's modulus at 900°C can be determined by the resonance method in accordance with the method defined in JIS Z2280: 1993.

The ferritic stainless steel material according to the embodiment of the present invention preferably has an elongation at break at ordinary temperature (25°C) of 30% or more.

As used herein, the elongation at break at ordinary temperature is an index of workability. The elongation at break at ordinary temperature of 30% or more ensures the workability for battery components having various shapes. The upper limit of the elongation at break at ordinary temperature is not particularly limited, but it may be, for example, 50%.

The elongation at break at ordinary temperature can be determined by conducting a tensile test in accordance with JIS Z2241: 2011 using a JIS No. 13 B specimen sampled so that the rolling direction of the ferritic stainless steel material is parallel to the parallel portion.

The ferritic stainless steel material according to the embodiment of the present invention preferably has a maximum pitting depth of less than 200 µm.

As used herein, the maximum pitting depth is an index of corrosion resistance. The maximum pitting corrosion depth of less than 200 µm can be considered to be excellent in terms of corrosion resistance.

The maximum pitting depth can be determined by subjecting the ferritic stainless steel material to a rust removal treatment by conducting 30 cycles of the JASO-CCT test, and then performing measurement by a focal depth method using a microscope.

The thickness of the ferritic stainless steel material according to the embodiment of the present invention may be set as needed depending on properties of products for which the ferritic stainless steel material is used, and is not particularly limited. For example, in view of the weight reduction of the ferritic stainless steel material and the battery component formed from it, the thickness of the ferritic stainless steel material is preferably 1.0 mm or less. Also, in view of the stiffness of the ferritic stainless steel material and the battery component formed from it, the thickness of the ferritic stainless steel is more preferably 0.1 mm or more. Furthermore, in view of the fire resistance and the costs of the ferritic stainless steel material and the battery component formed from it, the thickness of the ferritic stainless steel material is even more preferably 0.2 to 0.8 mm. Moreover, in view of the weldability of the ferritic stainless steel material and the battery component formed from it, the thickness of the ferritic stainless steel material is even more preferably 0.3 to 0.6 mm.

The ferritic stainless steel material according to the embodiment of the present invention has an improved impact absorption property during high-speed deformation and high-temperature stiffness, because the compositions and the amounts of the defined deposits are controlled as described above. Therefore, the ferritic stainless steel material according to the embodiment of the present invention has improved protection performance and resistance to thermal runaway when the batteries are subjected to impacts due to collision accidents and the like. Also, the ferritic stainless steel according to the embodiment of the present invention contributes to lower costs of battery components because it eliminates the need to form an insulation layer or apply mica, which would be required for conventional arts to suppress thermal runaway of batteries due to impacts. In other words, the use of the ferritic stainless steel material according to the embodiment of the present invention as a material for battery components in transportation equipment (especially automobiles, buses, and rail cars) can achieve environmental measures through weight reduction, improvement of collision safety, measures against thermal runaway, and cost reduction.

### (2) Method for Producing Ferritic Stainless Steel Material for Battery Components

The method for producing the ferritic stainless steel material according to the embodiment of the present invention is not particularly limited as long as it is a method that can produce a ferritic stainless steel material having the above features.

For example, the method for producing the ferritic stainless steel material according to the embodiment of the present invention is performed by annealing a cold-rolled material having the above composition at 850 to 1050°C, and then cooling it at a cooling rate of 10°C/second or less to 800°C . The control to these conditions allows the ferritic stainless steel material having the above features to be produced. After annealing and cooling as described above, a pickling treatment may be performed if necessary.

Details for the above production method will be described.

The cold-rolled material can be produced by ordinary methods. Specifically, stainless steel having the above composition is first smelted, and forged or cast, and then hot-rolled to obtain a hot-rolled material. The hot-rolled material is then annealed, washed with an acid, and cold-rolled in this order to obtain a cold-rolled material. Here, each step can be carried out using existing facilities, and conditions thereof can be adjusted according to the composition of the stainless steel material and the like. Existing treatments (e.g., surface polishing, temper rolling, treatment with a tension leveler, etc.) may also be performed if necessary.

The cold-rolled material obtained as described above is annealed at 850 to 1050°C. By annealing in this temperature range, a recrystallized structure can be obtained. In particular, from the viewpoint of workability and toughness, the annealing temperature is preferably 880 to 1000°C. By annealing in this temperature range, the grain size number in accordance with JIS G0551: 2013 can be controlled to 5 to 9, preferably 6 to 8. The annealing can be performed in ordinary annealing equipment, such as a continuous annealing line.

After annealing, the cold-rolled material is typically cooled by an air cooling process, and in order to produce 0.010% by volume or more of the Ti-based deposits and/or the Nb-based deposits (which are, hereinafter, abbreviated as "deposits") in the cooling process, the cooling rate to 800°C is 10°C/second or less. By annealing under such conditions, the deposition of the deposits can be promoted. The lower limit of the cooling rate is not particularly limited, but if it is excessively slow, the deposits may become too coarse, resulting in degradation of toughness. Therefore, the lower limit of the cooling rate is preferably 3°C/second. In view of productivity and steel shape, the cooling rate is more preferably 4 to 8°C/second.

The annealed, cold-rolled material cooled to 800°C is preferably cooled at a cooling rate of more than 10°C/second to 400°C (i.e., the temperature range from 800°C to 400°C), more preferably at 12°C/second or more, and even more preferably at 15°C/second or more. This is because the cooling rate of 10°C/second or less in this temperature range will result in the formation of intermetallic compounds such as Laves phases and σ phases, which significantly reduce low-temperature toughness. The upper limit of the cooling rate is not limited, but an excessive high rate may result in a significant deterioration of steel shape. Therefore, the upper limit of the cooling rate is preferably 100°C/second. In view of pickling properties of the subsequent step and the shape of the steel material, the cooling rate is more preferably 20 to 80°C/second.

### (3) Battery Components

The battery component includes the ferritic stainless steel material as described above. The above ferritic stainless steel has an improved shock absorption property during high-speed deformation and improved high-temperature stiffness. Therefore, the battery component has improved protection performance and resistance to thermal runaway when the battery is subjected to impacts due to collision accidents and the like.

Examples of the battery components include, but not limited to, for example, battery cases, battery packs, battery modules, and battery covers.

### [Examples]

The content of the present invention will be specifically described below with reference to Examples, but the present invention is not construed as being limited thereto.

Ferritic stainless steel sheets were prepared according to the following procedure.

Each of stainless steels having the compositions shown in Tables 1 and 2 was smelted and hot-rolled to obtain a hot-rolled sheet having a thickness of 3.8 mm, and then pickled to obtain a hot-rolled pickled sheet. The hot-rolled pickled sheet was cold-rolled to obtain a cold-rolled sheet having a thickness of 0.6 mm. The cold-rolled sheet was annealed and cooled under the conditions shown in Tables 3 and 4, and then pickled to obtain cold-rolled annealed sheet (ferritic stainless steel sheet).

**[Table 1]**

| Steel Class Nos. | Composition (% by mass) | | | | | | | | | | |
|---|---|---|---|---|---|---|---|---|---|---|---|
| | C | Si | Mn | P | S | Cr | N | Ti | Nb | Al | Others |
| A1 | 0.005 | 0.42 | 0.18 | 0.029 | 0.0008 | 10.5 | 0.016 | 0.16 | -- | 0.070 | -- |
| A2 | 0.042 | 0.30 | 0.29 | 0.031 | 0.0004 | 16.1 | 0.020 | 0.05 | 0.05 | -- | -- |
| A3 | 0.006 | 0.10 | 0.10 | 0.030 | 0.0003 | 17.2 | 0.009 | 0.17 | -- | 0.030 | -- |
| A4 | 0.005 | 0.07 | 0.09 | 0.032 | 0.0007 | 17.5 | 0.010 | 0.18 | -- | 0.050 | Mo:1.10, B:0.0008 |
| A5 | 0.005 | 0.38 | 0.30 | 0.021 | 0.0006 | 14.1 | 0.009 | 0.18 | -- | 0.120 | Cu:1.21, 0.0003 |
| A6 | 0.005 | 0.42 | 0.21 | 0.030 | 0.0015 | 14.5 | 0.007 | 0.16 | 0.20 | 0.050 | Ca:0.0015, Sn:0.11 Mg:0.0012 |
| A7 | 0.005 | 0.35 | 0.33 | 0.029 | 0.0008 | 17.2 | 0.009 | 0.12 | 0.55 | 0.100 | Cu:1.18, Mo:0:32 B:0.0005 |
| A8 | 0.005 | 0.17 | 0.15 | 0.029 | 0.0008 | 17.3 | 0.009 | 0.25 | -- | 0.060 | Mo:0.80, B:0.0010 |
| A9 | 0.003 | 0.21 | 0.31 | 0.019 | 0.0006 | 17.8 | 0.012 | 0.15 | -- | 0.120 | Mo:0.50,^{.}V:0.12 Mg:0.0004 |
| A10 | 0.013 | 0.45 | 0.31 | 0.019 | 0.0006 | 30.0 | 0.012 | 0.11 | 0.27 | 0.630 | Ni:0.20, Mo:2.10 Ca:0.0020 |
| A11 | 0.009 | 0.20 | 0.98 | 0.023 | 0.0007 | 17.5 | 0.016 | 0.09 | 0.47 | 0.080 | Mo:1.75, V:0.09 B:0.0007, Ca:0.0015 |
| A12 | 0.016 | 1.00 | 1.30 | 0.023 | 0.0007 | 11.6 | 0.013 | -- | 0.39 | 0.800 | W:0.61, REM:0.010 |
| A13 | 0.005 | 0.90 | 0.18 | 0.029 | 0.0008 | 10.5 | 0.016 | 0.16 | -- | 0.200 | -- |
| A14 | 0.003 | 0.88 | 0.36 | 0.011 | 0.0025 | 13.8 | 0.009 | -- | 0.38 | 0.050 | -- |
| A15 | 0.005 | 0.17 | 0.11 | 0.027 | 0.0007 | 17.5 | 0.016 | 0.15 | 0.15 | 0.060 | Cu:1.19, Mo:0.21 B:0.0010 |
| A16 | 0.011 | 0.32 | 0.10 | 0.030 | 0.0012 | 19.2 | 0.015 | -- | 0.32 | 0.030 | Cu:0.40, Ni:0.20 |
| A17 | 0.012 | 0.17 | 0.15 | 0.030 | 0.0012 | 19.5 | 0.010 | -- | 0.45 | 0.010 | Zr:0.05, Ta:0.030 Co:0.11 |
| A18 | 0.022 | 0.05 | 0.54 | 0.018 | 0.0008 | 16.5 | 0.017 | 0.10 | 0.20 | 0.050 | Hf:0.030, 5b:0.130 |
| A19 | 0.005 | 1.80 | 0.05 | 0.029 | 0.0008 | 14.2 | 0.009 | 0.21 | -- | 0.120 | Mo:0.21, B:0.0010 Ga:0.0050 |
| A20 | 0.002 | 0.02 | 0.02 | 0.011 | 0.0002 | 16.1 | 0.003 | 0.05 | -- | -- | -- |
| A21 | 0.009 | 0.10 | 0.20 | 0.024 | 0.0015 | 19.1 | 0.010 | 0.15 | 0.20 | -- | Mo:1.80 |
| A22 | 0.003 | 0.18 | 0.15 | 0.013 | 0.0017 | 19.2 | 0.009 | 0.15 | 0.20 | -- | Mo:1.10 |
| A23 | 0.005 | 0.12 | 0.15 | 0.033 | 0.0009 | 17.5 | 0.015 | 0.17 | 0.4 | -- | -- |
| A24 | 0.008 | 0.13 | 0.12 | 0.029 | 0.0006 | 22.2 | 0.019 | 0.10 | 0.25 | -- | Mo:1.17 |
| A25 | 0.004 | 0.10 | 0.13 | 0.028 | 0.0005 | 22.1 | 0.014 | -- | 0.28 | -- | Mo:1.59 |

**[Table 2]**

| Steel Class Nos. | Composition (% by mass) | | | | | | | | | | |
|---|---|---|---|---|---|---|---|---|---|---|---|
| | C | Si | Mn | P | S | Cr | N | Ti | Nb | Al | Others |
| B1 | 0.055 | 0.41 | 0.28 | 0.032 | 0.0006 | 10.5 | 0.008 | 0.05 | 0.05 | -- | -- |
| B2 | 0.012 | 2.50 | 0.34 | 0.040 | 0.0026 | 14.2 | 0.005 | -- | 0.35 | -- | -- |
| B3 | 0.004 | 0.25 | 2.60 | 0.020 | 0.0015 | 17.5 | 0.012 | -- | -- | -- | -- |
| B4 | 0.003 | 0.26 | 0.12 | 0.060 | 0.0053 | 14.1 | 0.015 | 0.18 | -- | 0.080 | -- |
| B5 | 0.008 | 153 | 0.12 | 0.032 | 0.0163 | 16.2 | 0.005 | 0.12 | 0.25 | 0.200 | -- |
| B6 | 0.009 | 0.29 | 0.26 | 0.010 | 0.0015 | 9.10 | 0.005 | 0.19 | 0.15 | -- | -- |
| B7 | 0.006 | 0.35 | 0.33 | 0.040 | 0.0033 | 11.1 | 0.056 | 0.35 | -- | -- | -- |
| B8 | 0.002 | 0.42 | 0.42 | 0.020 | 0.0032 | 13.8 | 0.016 | -- | 0.42 | 1.500 | -- |
| B9 | 0.003 | 0.17 | 0.26 | 0.030 | 0.0013 | 14.2 | 0.012 | 0.56 | -- | -- | -- |
| B10 | 0.011 | 0.52 | 0.27 | 0.020 | 0.0023 | 11.9 | 0.006 | -- | 0.63 | -- | -- |
| B11 | 0.005 | 0.31 | 0.21 | 0.010 | 0.0016 | 13.5 | 0.010 | 0.11 | -- | -- | Cu:3.50 |
| B12 | 0.009 | 0.39 | 0.12 | 0.040 | 0.0022 | 14.5 | 0.013 | 0.23 | -- | -- | Ni:2.60 |
| B13 | 0.006 | 3.21 | 0.33 | 0.030 | 0.0007 | 17.3 | 0.016 | 0.35 | -- | -- | Mo:3.50 |
| B14 | 0.005 | 0.98 | 0.17 | 0.050 | 0.0011 | 13.6 | 0.013 | 0.11 | -- | 0.060 | V:1:20 |
| B15 | 0.005 | 0.58 | 0.25 | 0.010 | 0.0025 | 16.3 | 0.009 | 0.15 | 0.27 | 0.130 | B:0.0063 |
| B16 | 0.002 | 0.31 | 0.65 | 0.016 | 0.0046 | 11.5 | 0.015 | 0.12 | 0.35 | 0.920 | Ca:0.0130 |
| B17 | 0.009 | 0.96 | 0.95 | 0.025 | 0.0056 | 10.9 | 0.005 | -- | 0.45 | 0.080 | W:3.60 |
| B18 | 0.013 | 1.69 | 0.35 | 0.035 | 0.0076 | 16.5 | 0.013 | -- | 0.45 | 0.120 | Zr:0.52 |
| B19 | 0.015 | 0.65 | 0.64 | 0.019 | 0.0009 | 17.5 | 0.015 | -- | 0.58 | 0.500 | Ta:1.600 |
| B20 | 0.012 | 0.43 | 0.56 | 0.037 | 0.0016 | 17.6 | 0.009 | 0.15 | -- | 0.070 | Hf:1.900 |
| B21 | 0.009 | 0.97 | 0.13 | 0.015 | 0.0016 | 10.8 | 0.005 | 0.12 | 0.27 | 0.020 | Sn:0.60 |
| B22 | 0.008 | 0.13 | 0.31 | 0.025 | 0.0013 | 14.5 | 0.015 | 0.12 | -- | 0.010 | Co:0.52 |
| B23 | 0.005 | 1.26 | 0.35 | 0.026 | 0.0010 | 17.4 | 0.013 | 0.11 | 0.56 | 0.260 | Mg:0.0260 |
| B24 | 0.008 | 0.20 | 0.91 | 0.024 | 0.0010 | 17.5 | 0.011 | 0.12 | 0.47 | -- | Sb:0.730 |
| B25 | 0.009 | 0.86 | 0.33 | 0.032 | 0.0015 | 13.9 | 0.015 | -- | 0.45 | -- | REM:0.260 |
| B26 | 0.010 | 0.35 | 0.81 | 0.035 | 0.0006 | 16.3 | 0.011 | -- | 0.05 | -- | Ga:0.3400 |
| The underlines indicate that they are outside the scope of the present invention. | | | | | | | | | | | |

**[Table 3]**

| | Steel Class Nos. | Annealing Temperature [°C] | Cooling Rate to 800°C [°C/sec] | Cooling Rate to 400°C [°C/sec] |
|---|---|---|---|---|
| Ex. 1 | A1 | 880 | 10 | 15 |
| Ex. 2 | A2 | 880 | 10 | 15 |
| Ex. 3 | A3 | 900 | 5 | 20 |
| Ex. 4 | A4 | 920 | 4 | 30 |
| Ex. 5 | A5 | 880 | 10 | 15 |
| Ex. 6 | A6 | 920 | 4 | 30 |
| Ex. 7 | A7 | 1040 | 10 | 40 |
| Ex. 8 | A8 | 920 | 4 | 30 |
| Ex. 9 | A9 | 900 | 5 | 20 |
| Ex. 10 | A10 | 1050 | 9 | 80 |
| Ex. 11 | A11 | 1050 | 9 | 70 |
| Ex. 12 | A12 | 880 | 10 | 15 |
| Ex. 13 | A13 | 900 | 5 | 20 |
| Ex. 14 | A14 | 1040 | 10 | 40 |
| Ex. 15 | A15 | 920 | 4 | 30 |
| Ex. 16 | A16 | 1000 | 8 | 50 |
| Ex. 17 | A17 | 1050 | 9 | 80 |
| Ex. 18 | A18 | 880 | 10 | 15 |
| Ex. 19 | A19 | 1040 | 10 | 40 |
| Ex. 20 | A21 | 1000 | 8 | 50 |
| Ex. 21 | A22 | 1000 | 8 | 50 |
| Ex. 22 | A23 | 1040 | 10 | 40 |
| Ex. 23 | A24 | 1000 | 8 | 50 |
| Ex. 24 | A25 | 1040 | 10 | 40 |

**[Table 4]**

| | Steel Class Nos. | Annealing Temperature [°C] | Cooling Rate to 800°C [°C/sec] | Cooling Rate to 400°C [°C/sec] |
|---|---|---|---|---|
| Comp. 1 | A1 | 880 | 20 | 15 |
| Comp. 2 | A4 | 920 | 30 | 30 |
| Comp. 3 | A16 | 1100 | 8 | 50 |
| Comp. 4 | A20 | 830 | 5 | 20 |
| Comp. 5 | B1 | 920 | 4 | 30 |
| Comp. 6 | B2 | 1040 | 10 | 40 |
| Comp. 7 | B3 | 900 | 5 | 20 |
| Comp. 8 | B4 | 920 | 4 | 30 |
| Comp. 9 | B5 | 1040 | 10 | 40 |
| Comp. 10 | B6 | 900 | 5 | 20 |
| Comp. 11 | B7 | 880 | 10 | 15 |
| Comp. 12 | B8 | 1040 | 10 | 40 |
| Comp. 13 | B9 | 920 | 4 | 30 |
| Comp. 14 | B10 | 1040 | 10 | 40 |
| Comp. 15 | B11 | 880 | 10 | 15 |
| Comp. 16 | B12 | 920 | 4 | 30 |
| Comp. 17 | B13 | 900 | 5 | 20 |
| Comp. 18 | B14 | 880 | 10 | 15 |
| Comp. 19 | B15 | 1100 | 9 | 80 |
| Comp. 20 | B16 | 1070 | 9 | 70 |
| Comp. 21 | B17 | 920 | 4 | 30 |
| Comp. 22 | B18 | 1100 | 9 | 80 |
| Comp. 23 | B19 | 1070 | 9 | 70 |
| Comp. 24 | B20 | 880 | 10 | 15 |
| Comp. 25 | B21 | 1040 | 10 | 40 |
| Comp. 26 | B22 | 920 | 4 | 30 |
| Comp. 27 | B23 | 1100 | 9 | 80 |
| Comp. 28 | B24 | 1070 | 9 | 70 |
| Comp. 29 | B25 | 1100 | 9 | 80 |
| Comp. 30 | B26 | 1070 | 9 | 70 |
| Comp. 31 | B1 | 880 | 9 | 9 |
| The underlines indicate that they are outside the scope of the present invention. | | | | |

The following evaluations were performed on each cold-rolled annealed sheet obtained as described above.

### <Amounts of Ti-based Deposits and/or Nb-based Deposits (which are, hereinafter, abbreviated as "deposits")>

The amounts of the deposits were determined from area ratios of regions where deposits were present in the entire structure by microscopic observation of a cross section of the cold-rolled annealed plate according to the point counting method defined in JIS G0555: 2003. Specifically, the cold-rolled annealed sheet was subjected to filling with a resin so that the cross-section in the thickness direction parallel to the rolling direction became the observation surface, and subjected to mirror polishing, and inclusions were then observed at 1/4 to 3/4 of the thickness using an optical microscope at magnifications of 400. Using an optical microscope with a 20 × 20 lattice attached to the measuring lens, 60 views were observed, and the inclusions over the lattice were counted to calculate the area ratios, which was determined to be the amounts (% by volume) of the deposits.

### <Grain Size of Deposits>

The grain size of the deposits was determined by observing the deposits at 1/4 to 3/4 of the thickness using a scanning electron microscope at magnifications of 3000 after the cold-rolled annealed sheet was subjected to filling with a resin and mirror polishing so that the cross section in the thickness direction parallel to the rolling direction of the cold-rolled annealed sheet became the observation surface. The observation was performed in 10 fields of view, and the maximum area of the deposits was calculated and its circular-equivalent diameter was determined to be the grain size of the deposits. The deposits were determined to be deposits when the content of Ti and/or the content of Nb of the deposits were higher than the content of the base metal by EDS analysis attached to the scanning electron microscope.

### <Flow Stress at 10% Strain in Tensile Test at Strain Rate of 10³/second>

A tensile test specimen having a parallel portion width of 2.0 mm and a gauge length of 4.8 mm were taken from each cold-rolled annealed so that the tensile direction was in the rolling direction, and a high-speed tensile test was conducted. The high-speed tensile test was conducted using a high-speed tensile tester (sensing block type high-speed tensile tester manufactured by SAGINOMIYA SEISAKUSHO, INC.) at a strain rate of 10³/second to determine the relationship between flow stress and strain. The flow stress at 10% strain was then determined.

### <Young's Modulus at 900°C>

The Young's modulus at 900°C was determined by the resonance method in accordance with the method defined in JIS Z2280: 1993. Specifically, a measuring specimen having a rolling direction length of 60 mm and a width direction length 10 mm was taken from each cold-rolled annealed sheet, and the measurement was performed at 900°C by the resonance method using an elastic modulus measuring device (EG-HT elastic modulus measuring device manufactured by Nihon Techno-Plus Co., Ltd.).

### <Elongation at Break at Ordinary Temperature>

Using a JIS No. 13 B specimen taken from each cold-rolled annealed sheet so that the rolling direction was parallel to the parallel portion, the elongation at break at ordinary temperature was determined by conducting a tensile test at ordinary temperature (25°C) using a tensile tester (Autograph AG-X precision universal tester manufactured by Shimadzu Corporation) in accordance with JIS Z2241: 2011.

### <Corrosion Resistance (Maximum Pitting Depth)>

A measuring specimen was taken from each cold-rolled annealed sheet having a rolling direction length of 150 mm and a width direction length of 75 mm. Subsequently, 30 cycles of the JASO-CCT test (one cycle of salt spray (35°C, 5% concentration, 2 hours), drying (60°C, 25% RH, 4 hours), and wetting (50°C, 95% RH, 2 hours) according to the conditions of M609-91) were conducted, and a rust removal treatment was then performed. The maximum pitting depth was then measured by the focal depth method using a microscope. In this evaluation, the specimen having a maximum pitting depth of less than 200 µm was evaluated as circle, and the specimen having a maximum pitting depth of 200 µm or more was evaluated as x.

The results of the above evaluations are shown in Tables 5 and 6.

**[Table 5]**

| | Steel Class Nos. | Amount of Deposits [% by volume ] | Grain Size of Deposits [µm] | Fluid Stress [MPa] | Young's Modulus [GPa] | Elongation at Break [%] | Corrosion Resistance |
|---|---|---|---|---|---|---|---|
| Ex. 1 | A1 | 0.054 | 5 | 553 | 102 | 36 | ○ |
| Ex. 2 | A2 | 0.142 | 7 | 589 | 110 | 35 | ○ |
| Ex. 3 | A3 | 0.046 | 4 | 587 | 125 | 34 | ○ |
| Ex. 4 | A4 | 0.075 | 5 | 595 | 120 | 33 | ○ |
| Ex. 5 | A5 | 0.046 | 3 | 610 | 86 | 33 | ○ |
| Ex. 6 | A6 | 0.087 | 8 | 616 | 103 | 34 | ○ |
| Ex. 7 | A7 | 0.079 | 10 | 649 | 118 | 30 | ○ |
| Ex. 8 | A8 | 0.075 | 6 | 587 | 103 | 35 | ○ |
| Ex. 9 | A9 | 0.089 | 3 | 539 | 119 | 35 | ○ |
| Ex. 10 | A10 | 0.079 | 5 | 587 | 97 | 32 | ○ |
| Ex. 11 | A11 | 0.075 | 8 | 652 | 104 | 30 | ○ |
| Ex. 12 | A12 | 0.071 | 2 | 573 | 95 | 31 | ○ |
| Ex. 13 | A13 | 0.042 | 3 | 609 | 92 | 30 | ○ |
| Ex. 14 | A14 | 0.021 | 3 | 598 | 109 | 32 | ○ |
| Ex. 15 | A15 | 0.054 | 4 | 657 | 98 | 33 | ○ |
| Ex. 16 | A16 | 0.153 | 3 | 646 | 103 | 34 | ○ |
| Ex. 17 | A17 | 0.088 | 4 | 628 | 118 | 34 | ○ |
| Ex. 18 | A18 | 0.095 | 2 | 525 | 106 | 35 | ○ |
| Ex. 19 | A19 | 0.023 | 2 | 578 | 99 | 36 | ○ |
| Ex. 20 | A21 | 0.079 | 1 | 603 | 108 | 33 | ○ |
| Ex. 21 | A22 | 0.042 | 3 | 587 | 98 | 34 | ○ |
| Ex. 22 | A23 | 0.083 | 5 | 505 | 104 | 36 | ○ |
| Ex. 23 | A24 | 0.087 | 6 | 647 | 107 | 32 | ○ |
| Ex. 24 | A25 | 0.089 | 2 | 625 | 112 | 32 | ○ |

**[Table 6]**

| | Steel Class Nos. | Amount of Deposits [% by volume ] | Size of Deposits, etc. | Fluid Stress [MPa] | Young's Modulus [GPa] | Elongation at Break [%] | Corrosion Resistance |
|---|---|---|---|---|---|---|---|
| Comp. 1 | A1 | 0.007 | 5 | 482 | 102 | 36 | ○ |
| Comp. 2 | A4 | 0.005 | 5 | 459 | 120 | 33 | ○ |
| Comp. 3 | A16 | 0.009 | 3 | 490 | 103 | 28 | ○ |
| Comp. 4 | A20 | 0.009 | 1 | 453 | 79 | 26 | × |
| Comp. 5 | B1 | 0.276 | 1 | 428 | 91 | 29 | × |
| Comp. 6 | B2 | 0.073 | 5 | 487 | 103 | 25 | ○ |
| Comp. 7 | B3 | 0.005 | 1 | 464 | 105 | 28 | × |
| Comp. 8 | B4 | 0.048 | 3 | 477 | 105 | 27 | × |
| Comp. 9 | B5 | 0.028 | 2 | 455 | 103 | 29 | × |
| Comp. 10 | B6 | 0.055 | 4 | 403 | 79 | 32 | × |
| Comp. 11 | B7 | 0.360 | 8 | 421 | 70 | 28 | × |
| Comp. 12 | B8 | 0.087 | 6 | 523 | 77 | 27 | × |
| Comp. 13 | B9 | 0.090 | 15 | 488 | 99 | 29 | ○ |
| Comp. 14 | B10 | 0.062 | 12 | 467 | 114 | 27 | ○ |
| Comp. 15 | B11 | 0.054 | 4 | 457 | 109 | 27 | × |
| Comp. 16 | B12 | 0.019 | 5 | 538 | 70 | 25 | ○ |
| Comp. 17 | B13 | 0.029 | 5 | 587 | 75 | 26 | ○ |
| Comp. 18 | B14 | 0.075 | 2 | 598 | 79 | 25 | ○ |
| Comp. 19 | B15 | 0.087 | 4 | 492 | 112 | 29 | × |
| Comp. 20 | B16 | 0.088 | 4 | 491 | 107 | 33 | × |
| Comp. 21 | B17 | 0.074 | 3 | 604 | 79 | 29 | ○ |
| Comp. 22 | B18 | 0.047 | 4 | 565 | 79 | 28 | ○ |
| Comp. 23 | B19 | 0.076 | 6 | 476 | 105 | 28 | ○ |
| Comp. 24 | B20 | 0.028 | 3 | 447 | 112 | 27 | ○ |
| Comp. 25 | B21 | 0.086 | 4 | 539 | 72 | 28 | ○ |
| Comp. 26 | B22 | 0.039 | 2 | 522 | 77 | 26 | × |
| Comp. 27 | B23 | 0.086 | 14 | 402 | 115 | 26 | × |
| Comp. 28 | B24 | 0.048 | 10 | 409 | 100 | 29 | × |
| Comp. 29 | B25 | 0.087 | 9 | 485 | 102 | 27 | ○ |
| Comp. 30 | B26 | 0.029 | 1 | 437 | 72 | 25 | × |
| Comp. 31 | B1 | 0.006 | 11 | 480 | 75 | 23 | × |
| The underlines indicate that they are outside the scope of the present invention. | | | | | | | |

As shown in Table 5, all the cold-rolled annealed sheets according to Examples 1 to 24 had higher flow stress at 10% strain and higher Young's modulus at 900°C when they were subjected to the tensile test at a strain rate of 10³/second and the improved impact absorption property during high-speed deformation and improved high-temperature stiffness. The cold-rolled annealed sheets according to Examples 1 to 24 also had good results for the elongation at break and corrosion resistance (maximum pitting depth) at ordinary temperature, and had improved workability and improved corrosion resistance.

On the other hand, as shown in Table 6, for the cold-rolled annealed sheets according to Comparative Examples 1 to 4, either or both of the flow stress at 10% strain and Young's modulus at 900°C was/were lower when they were subjected to the tensile test at a strain rate of 10³/second, because the annealing temperature or cooling rate conditions were not appropriate and the amounts of deposits were too low. Also, for the cold-rolled annealed sheets according to Comparative Examples 5 to 31, either or both of the flow stress at 10% strain and Young's modulus at 900°C was/were lower when they were subjected to the tensile test at a strain rate of 10³/second, because they did not satisfy the defined compositions, and the annealing temperature was not appropriate in some of Comparative Examples. Furthermore, the cold-rolled and annealed sheets according to Comparative Examples 3 to 31 were also insufficient for one or both of the results of the elongation at break and the corrosion resistance (maximum pitting depth) at ordinary temperature.

As can be seen from the above results, according to the present invention, it is possible to provide a ferritic stainless steel material for battery components that has improved protection performance and resistance to thermal runaway when the batteries are subjected to impacts due to collision accidents or the like; a method for producing the same; and a battery component.

Also, based on the above results, the present invention can be in accordance with the following aspects:

[1] A ferritic stainless steel material for battery components, the ferritic stainless steel material having a composition comprising, on a mass basis, C: 0.001 to 0.050%, Si: 0.01 to 2.00%, Mn: 0.01 to 2.00%, P: 0.010 to 0.050%, S: 0.0001 to 0.0100%, Cr: 10.0 to 30.0%, and N: 0.001 to 0.050%, and further comprising one or more selected from Ti: 0.01 to 0.50% and Nb: 0.01 to 0.60%, the balance being Fe and impurities,
   wherein the ferritic stainless steel material comprises 0.010% by volume or more of Ti-based deposits and/or Nb-based deposits.
[2] The ferritic stainless steel material for battery components according to [1], further comprising one or more selected from Ni: 0.01 to 2.00%, Al: 0.001 to 1.000%, Cu: 0.01 to 2.00%, Mo: 0.01 to 3.00%, V: 0.01 to 0.50%, Zr: 0.01 to 0.50%, B: 0.0002 to 0.0050%, Ca: 0.0005 to 0.0100%, W :0.10 to 3.00%, Sn: 0.01 to 0.50%, Co: 0.03 to 0.30%, Mg: 0.0002 to 0.0100%, Sb: 0.005 to 0.300%, REM: 0.002 to 0.200%, Ga: 0.0002 to 0.3000%, Ta: 0.001 to 1.000%, Hf: 0.001 to 1.000%, and Bi: 0.001 to 0.020% on a mass basis.
[3] The ferritic stainless steel material for battery components according to [1] or [2], wherein the Ti-based deposits and/or the Nb-based deposits have a grain size of 10 µm or less.
[4] The ferritic stainless steel material for battery components according to any one of [1] to [3], wherein a flow stress at 10% strain in a tensile test at a strain rate of 10³/second is 500 MPa or more, and
   wherein a Young's Modulus at 900°C is 80 GPa or more.
[5] The ferritic stainless steel material for battery components according to any one of [1] to [4], wherein the ferritic stainless steel material satisfies at least one of the following properties (1) and (2):
   (1) an elongation at break at ordinary temperature of 30% or more; and
   (2) a maximum pitting depth of less than 200 µm.
[6] The ferritic stainless steel material for battery components according to any one of [1] to [5], wherein the ferritic stainless steel material has a thickness of 1.0 mm or less.
[7] A method for producing a ferritic stainless steel material for battery components, comprising: annealing a cold-rolled material at 850 to 1050°C, the cold-rolling member having a composition comprising, on a mass basis, C: 0.001 to 0.050%, Si: 0.01 to 2.00%, Mn: 0.01 to 2.00%, P: 0.010 to 0.050%, S: 0.0001 to 0.0100%, Cr: 10.0 to 30.0%, N: 0.001 to 0.050%, and further comprising one or more selected from Ti: 0.01 to 0.50% and Nb: 0.01 to 0.60%, the balance being Fe and impurities; and cooling it at a cooling rate of 10°C/second or less to 800°C.
[8] The method for producing a ferritic stainless steel material for battery components according to [7], wherein the cold-rolled material further comprises one or more selected from Ni: 0.01 to 2.00%, Al: 0.001 to 1.000%, Cu: 0.01 to 2.00%, Mo: 0.01 to 3.00%, V: 0.01 to 0.50%, Zr: 0.01 to 0.50%, B: 0.0002 to 0.0050%, Ca: 0.0005 to 0.0100%, W :0.10 to 3.00%, Sn: 0.01 to 0.50%, Co: 0.03 to 0.30%, Mg: 0.0002 to 0.0100%, Sb: 0.005 to 0.300%, REM: 0.002 to 0.200%, Ga: 0.0002 to 0.3000%, Ta: 0.001 to 1.000%, Hf: 0.001 to 1.000%, and Bi: 0.001 to 0.020% on a mass basis.
[9] The method for producing a ferritic stainless steel material for battery components according to [7] or [8], wherein the cooling is performed at a cooling rate of more than 10°C/second from 800°C to 400°C.
[10] The method for producing a ferritic stainless steel material for battery components according to [9], wherein the cooling rate from 800°C to 400°C is 12°C/second or more.
[11] A battery component comprising the ferritic stainless steel material for battery components according to any one of [1] to [6].

## Claims

1. A ferritic stainless steel material for battery components, the ferritic stainless steel material having a composition comprising, on a mass basis, C: 0.001 to 0.050%, Si: 0.01 to 2.00%, Mn: 0.01 to 2.00%, P: 0.010 to 0.050%, S: 0.0001 to 0.0100%, Cr: 10.0 to 30.0%, and N: 0.001 to 0.050%, and further comprising one or more selected from Ti: 0.01 to 0.50% and Nb: 0.01 to 0.60%, the balance being Fe and impurities,
wherein the ferritic stainless steel material comprises 0.010% by volume or more of Ti-based deposits and/or Nb-based deposits.

2. The ferritic stainless steel material for battery components according to claim 1, further comprising one or more selected from Ni: 0.01 to 2.00%, Al: 0.001 to 1.000%, Cu: 0.01 to 2.00%, Mo: 0.01 to 3.00%, V: 0.01 to 0.50%, Zr: 0.01 to 0.50%, B: 0.0002 to 0.0050%, Ca: 0.0005 to 0.0100%, W :0.10 to 3.00%, Sn: 0.01 to 0.50%, Co: 0.03 to 0.30%, Mg: 0.0002 to 0.0100%, Sb: 0.005 to 0.300%, REM: 0.002 to 0.200%, Ga: 0.0002 to 0.3000%, Ta: 0.001 to 1.000%, Hf: 0.001 to 1.000%, and Bi: 0.001 to 0.020% on a mass basis.

3. The ferritic stainless steel material for battery components according to claim 1 or 2, wherein the Ti-based deposits and/or the Nb-based deposits have a grain size of 10 µm or less.

4. The ferritic stainless steel material for battery components according to any one of claims 1 to 3, wherein a flow stress at 10% strain in a tensile test at a strain rate of 10³/second is 500 MPa or more, and
wherein a Young's Modulus at 900°C is 80 GPa or more.

5. The ferritic stainless steel material for battery components according to any one of claims 1 to 4, wherein the ferritic stainless steel material satisfies at least one of the following properties (1) and (2):
(1) an elongation at break at ordinary temperature of 30% or more; and
(2) a maximum pitting depth of less than 200 µm.

6. The ferritic stainless steel material for battery components according to any one of claims 1 to 5, wherein the ferritic stainless steel material has a thickness of 1.0 mm or less.

7. A method for producing a ferritic stainless steel material for battery components, comprising: annealing a cold-rolled material at 850 to 1050°C, the cold-rolling member having a composition comprising, a mass basis, C: 0.001 to 0.050%, Si: 0.01 to 2.00%, Mn: 0.01 to 2.00%, P: 0.010 to 0.050%, S: 0.0001 to 0.0100%, Cr: 10.0 to 30.0%, N: 0.001 to 0.050%, and further comprising one or more selected from Ti: 0.01 to 0.50% and Nb: 0.01 to 0.60%, the balance being Fe and impurities; and cooling it at a cooling rate of 10°C/second or less to 800°C.

8. The method for producing a ferritic stainless steel material for battery components according to claim 7, wherein the cold-rolled material further comprises one or more selected from Ni: 0.01 to 2.00%, Al: 0.001 to 1.000%, Cu: 0.01 to 2.00%, Mo: 0.01 to 3.00%, V: 0.01 to 0.50%, Zr: 0.01 to 0.50%, B: 0.0002 to 0.0050%, Ca: 0.0005 to 0.0100%, W :0.10 to 3.00%, Sn: 0.01 to 0.50%, Co: 0.03 to 0.30%, Mg: 0.0002 to 0.0100%, Sb: 0.005 to 0.300%, REM: 0.002 to 0.200%, Ga: 0.0002 to 0.3000%, Ta: 0.001 to 1.000%, Hf: 0.001 to 1.000%, and Bi: 0.001 to 0.020% on a mass basis.

9. The method for producing a ferritic stainless steel material for battery components according to claim 7 or 8, wherein the cooling is performed at a cooling rate of more than 10°C/second from 800°C to 400°C.

10. The method for producing a ferritic stainless steel material for battery components according to claim 9, wherein the cooling rate from 800°C to 400°C is 12°C/second or more.

11. A battery component comprising the ferritic stainless steel material for battery components according to any one of claims 1 to 6.
